# FASCICULE DE BREVET EUROPEEN

(11) **EP 1 415 457 B1**
(45) Date de publication et mention de la délivrance du brevet: **28.09.2005**
(21) Numéro de dépôt: 02794610.2
(22) Date de dépôt: 30.07.2002
(51) Int. Cl.: H04L 29/12

(54) **METHODE ET DISPOSITIF D'IDENTIFICATION DES DISPOSITIFS CONNECTES A UN RESEAU DE COMMUNICATION**
VERFAHREN UND VORRICHTUNG ZUR IDENTIFIZIERUNG DER AN DEM KOMMUNIKATINETZWERK VERBUNDENEN VORRICHTUNGEN
METHOD AND DEVICE FOR IDENTIFYING DEVICES CONNECTED TO A COMMUNICATION NETWORK

(30) Priorité: 10.08.2001 FR 0110697
(43) Date de publication de la demande: 06.05.2004
(73) Titulaire: Thomson Licensing S.A., 92100 Boulogne Billancourt (FR)
(72) Inventeur: BICHOT, Guillaume, F-35630 La Chapelle Chaussee (FR); BURDIN, Nicolas, F-35700 Rennes (FR)
(74) Mandataire: Kohrs, Martin
(86) Numéro de dépôt international: PCT/FR2002/002724
(87) Numéro de publication internationale: WO 2003/014941

(56) Documents cités:
- EP-A- 0 961 453
- WO-A-01/22721

## Description

La présente invention concerne les réseaux de communication, plus particulièrement un procédé d'identification de périphériques connectés à ce réseau après une réinitialisation du réseau, aussi bien que le dispositif pour mettre en oeuvre le procédé.

Le bus IEEE1394, défini dans le document « IEEE 1394-1995 Standard for a High Performance Serial Bus », est un bus série pour les transmissions numériques permettant la connexion de dispositifs appelés dans la suite périphériques. Chacun de ces périphériques interconnectés possède une adresse physique qui peut changer après un changement de configuration du réseau (connexion d'un nouveau périphérique au réseau, déconnexion d'un périphérique au réseau, etc.) et une adresse statique appelée EUI-64 stockée de façon permanente en mémoire accessible en lecture par tout autre périphérique. Après tout changement de configuration du réseau, ce dernier procède automatiquement à une auto-reconfiguration (suite à une réinitialisation du bus appelée «bus reset » en anglais) qui implique une nouvelle numérotation des adresses physiques des périphériques présents sur le réseau. Cette nouvelle numérotation est simple puisque chaque périphérique est numéroté par un nombre distinct entre zéro et le nombre de périphériques présents sur le réseau. Chaque périphérique connaît à la fin du processus de reconfiguration sa propre adresse physique et le nombre de périphériques connectés au réseau.

Cependant, selon le processus précédent de reconfiguration, les adresses physiques ne sont pas permanentes, si bien qu'un moyen d'identifier de manière unique et permanente un périphérique est d'utiliser l'adresse statique EUI-64 du périphérique correspondant. Cette adresse est unique, permanente et présente dans un registre bien spécifique de la ROM de configuration de chaque périphérique du réseau.

Afin de communiquer avec les autres périphériques, un périphérique donné a donc besoin de lire les adresses statiques EUI-64 des périphériques environnants (considérés alors comme des périphériques cibles par le périphérique donné pour la lecture des identifiants) connectés au réseau IEEE1394. Il peut par la suite conserver en interne l'association entre l'adresse physique et l'adresse statique EUI-64 des périphériques avec lesquels il a déjà communiqué afin d'accélérer les futurs échanges d'informations avec ces différents périphériques.

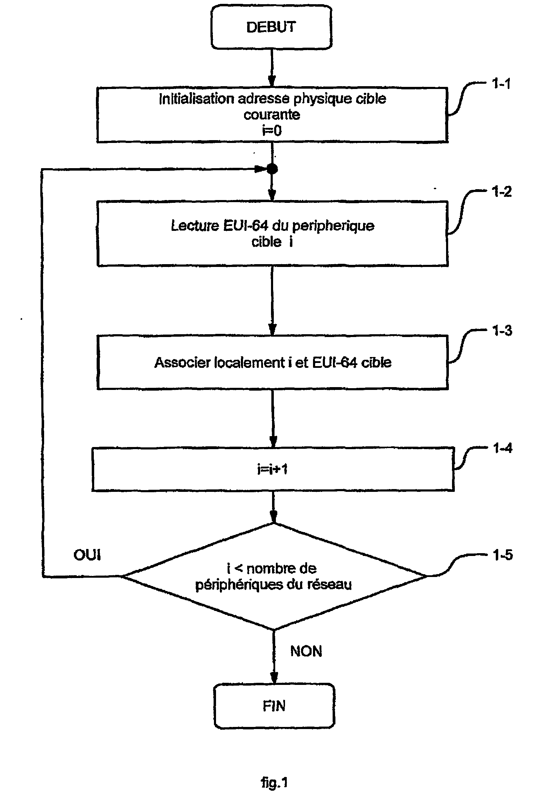

La figure 1 est un organigramme présentant un procédé de découverte du réseau environnant par un périphérique donné après la reconfiguration du réseau (suite à une réinitialisation du bus). La figure 1 présente un procédé, connu de l'homme du métier, de reconstruction d'une table d'association interne d'un périphérique donné donnant l'adresse statique EUI-64 de tous les autres périphériques connectés au réseau.

On considère le procédé pour un périphérique quelconque du réseau envisagé. Ce périphérique va explorer le réseau pour trouver les adresses EUI-64 bits des périphériques environnants dont il connaît les adresses physiques puisque ces dernières vont de zéro au nombre de périphériques moins un. Le périphérique considéré va donc lire les adresses statiques EUI-64 des périphériques environnants (1-2) en partant du périphérique ayant l'adresse physique égale à zéro (1-1) et les associer en interne dans une table à l'adresse physique du périphérique cible considéré (1-3). Le périphérique considéré va ensuite passer au périphérique d'adresse physique immédiatement suivante (1-4) tant qu'il restera dans le réseau des périphériques pour lesquels il n'aura pas fait l'association (1-5).

Un exemple d'un tel procédé se trouve dans le document WO 0122721.

Le problème réside dans le fait que tous les périphériques du réseau vont utiliser le même algorithme si bien que beaucoup de périphériques vont tenter en même temps de lire la ROM de configuration d'un même périphérique. La ROM d'un périphérique ne traite qu'une requête à la fois donc si le périphérique est occupé par une requête de lecture, les requêtes de lecture suivantes vont s'accumuler dans une à plusieurs piles, ce qui signifie qu'il peut y avoir des risques de débordement de ces piles et donc perte des requêtes de lecture. D'autre part, même si le périphérique possède des piles suffisamment grandes, vu que chaque périphérique possède un temps limité pour répondre à une requête, si le périphérique est surchargé par les requêtes, il peut excéder ce délai et donc ne pas être en mesure de répondre.

Ainsi, la présente invention concerne un procédé d'identification des périphériques connectés à un réseau, où chaque périphérique est distingué par un identifiant unique permanent et par une adresse physique, et où chaque périphérique cherche à associer en interne l'adresse physique et l'identifiant pour chacun des périphériques connectés au réseau, caractérisé en ce que, l'ordre d'exploration des autres périphériques par un périphérique donné est fonction d'un paramètre propre du périphérique donné. L'utilisation du paramètre propre permet d'introduire un facteur variable dans l'ordre de prcours du réseau au niveau des requêtes de lecture.

Selon un perfectionnement, le paramètre physique propre à chaque périphérique du réseau est son adresse physique dans le réseau.

Selon un perfectionnement, chaque périphérique connecté au réseau commence son exploration du réseau par lui-même, c'est à dire en se considérant comme le premier périphérique cible pour l'envoi de ses requêtes de lecture de l'identifiant.

Selon un autre perfectionnement, l'exploration du réseau par chaque périphérique se fait selon l'ordre de la numérotation des adresses physiques des différents périphériques connectés au réseau. Selon une variante, l'exploration du réseau par chaque périphérique se fait selon un ordre aléatoire de la numérotation des adresses physiques des différents périphériques connectés au réseau.

Selon un autre perfectionnement, chaque périphérique connecté au réseau envoie en parallèle plusieurs requêtes de lecture à des périphériques cibles différents, sans attendre la réponse d'un périphérique avant d'envoyer une requête au périphérique suivant.

L'objet de la présente invention est aussi un dispositif pour connexion à un réseau de communication, ledit dispositif comportant des moyens pour obtenir un identifiant permanent des dispositifs connectés au réseau et des moyens pour établir une table d'association entre l'identifiant permanent d'un dispositif et un identifiant temporaire de ce dispositif dans le réseau, caractérisé en ce que les moyens d'établissement de la table d'association sont adaptés pour effectuer une lecture de l'identificateur permanent d'un dispositif, l'ordre de lecture des identificateurs permanents auprès des dispositifs étant fonction d'un paramètre propre au dispositif effectuant la lecture.

D'autres caractéristiques et avantages de la présente invention apparaîtront à la lecture de la description de différents modes de réalisation, cette description étant faite avec référence aux dessins ci-annexés dans lesquels :
La figure 1 est un organigramme représentant la découverte topologique d'un réseau selon l'art antérieur.
Les figures 2 et 3 sont des organigrammes montrant différents modes de réalisation de la présente invention reposant sur l'ordre de parcours mais sans requête en parallèle.
La figure 4 montre un organigramme d'un mode réalisation préférentiel de la présente invention reposant sur l'ordre de parcours et l'envoi de requêtes en parallèle.
La figure 5 est un diagramme-bloc d'un périphérique capable de se connecter au réseau.

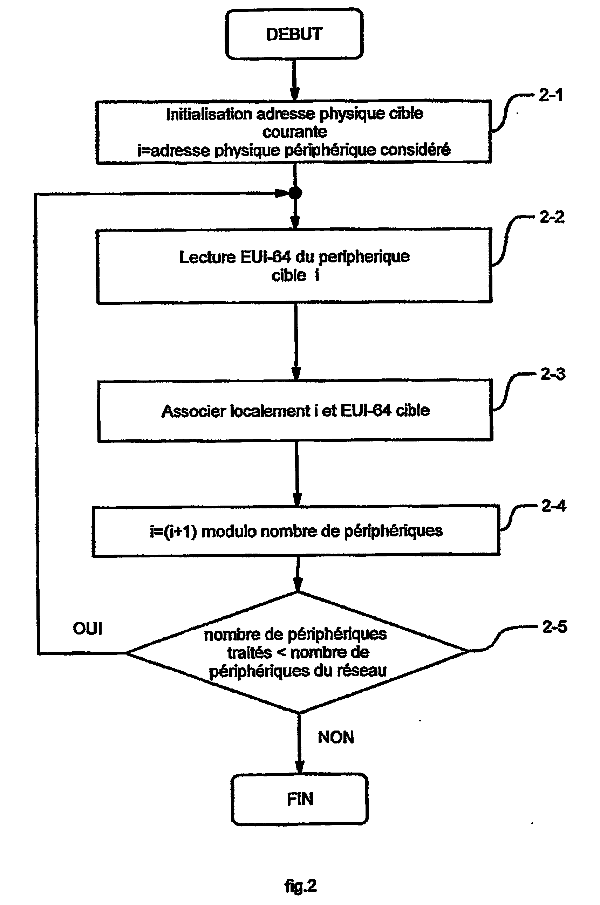

On décrira maintenant avec référence à la figure 2 un mode de réalisation particulier d'un procédé de découverte topologique d'un réseau comprenant un ensemble de n périphériques reliés entre eux, où chaque périphérique est distingué par un identifiant unique permanent et par une adresse physique, et où chaque périphérique cherche à associer en interne l'adresse physique et l'identifiant pour chacun des périphériques connectés au réseau, caractérisé en ce que, l'exploration des autres périphériques par un périphérique donné est fonction de l'adresse physique du périphérique donné.

La figure 2 est un organigramme présentant un procédé de découverte topologique d'un réseau IEEE1394 pour lequel l'identifiant unique et permanent de chaque périphérique est l'adresse statique EUI-64, et où l'exploration du réseau par chaque périphérique commence par lui-même et se fait selon l'ordre de la numérotation des adresses physiques des différents périphériques connectés au réseau. L'homme du métier peut bien sûr utiliser n'importe quel autre identifiant afin de désigner un périphérique donné ; l'utilisation de l'adresse statique EUI-64 n'est en aucun cas la seule possibilité d'identifier un périphérique, on peut aussi utiliser le numéro de série de la ROM de configuration de ce périphérique ou tout autre identifiant. On considère le procédé pour un périphérique quelconque du réseau envisagé. Ce périphérique va explorer le réseau pour trouver les adresses statiques EUI-64 des périphériques environnants dont il connaît les adresses physiques puisque ces dernières vont de zéro au nombre de périphériques moins un. Le périphérique considéré va donc lire l'adresse statique EUI-64 du premier périphérique cible (2-2) c'est à dire de lui-même (2-1) et l'associer en interne dans une table à l'adresse physique du périphérique cible considéré (2-3). Le périphérique cible courant va ensuite devenir le périphérique d'adresse physique immédiatement suivante modulo le nombre de périphériques connectés au réseau (2-4) tant qu'il restera dans le réseau des périphériques pour lesquels il n'aura pas fait l'association (2-5).

La présente invention limite le nombre de collisions et donc la surcharge des requêtes au niveau des ROM des périphériques cibles. En effet, le système de décalage instauré par l'emploi d'adresses physiques cibles initiales toutes distinctes les unes des autres et le passage au périphérique cible suivant par un incrément de une unité sur l'adresse physique du périphérique cible courant permettent de répartir équitablement les requêtes entre tous les périphériques présents sur le réseau.

D'autre part, pour augmenter l'efficacité de la découverte du réseau, il serait intéressant qu'un périphérique donné puisse lancer plusieurs requêtes en parallèle à différents périphériques cibles (c'est à dire lancer plusieurs requête de lecture sans avoir à attendre la réponse des périphériques cibles) au lieu de le faire périphérique par périphérique. Cela n'est pas possible avec le procédé présenté dans la figure 2.

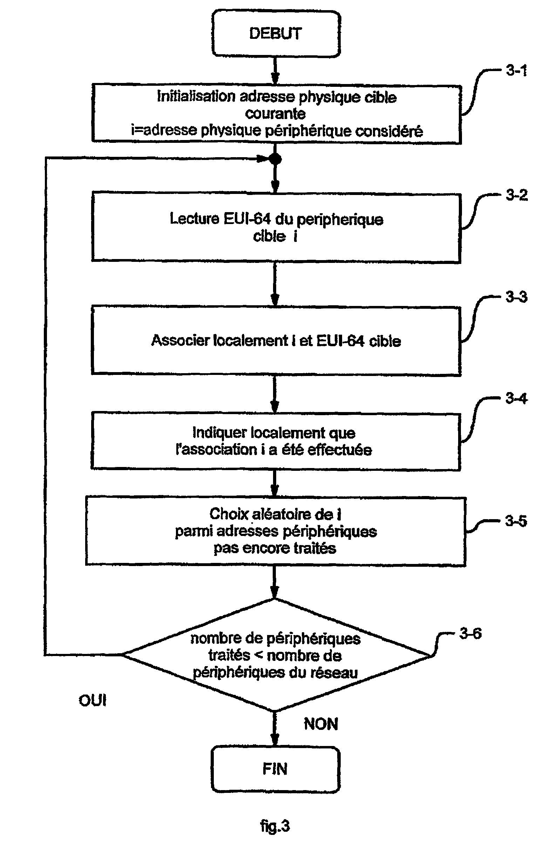

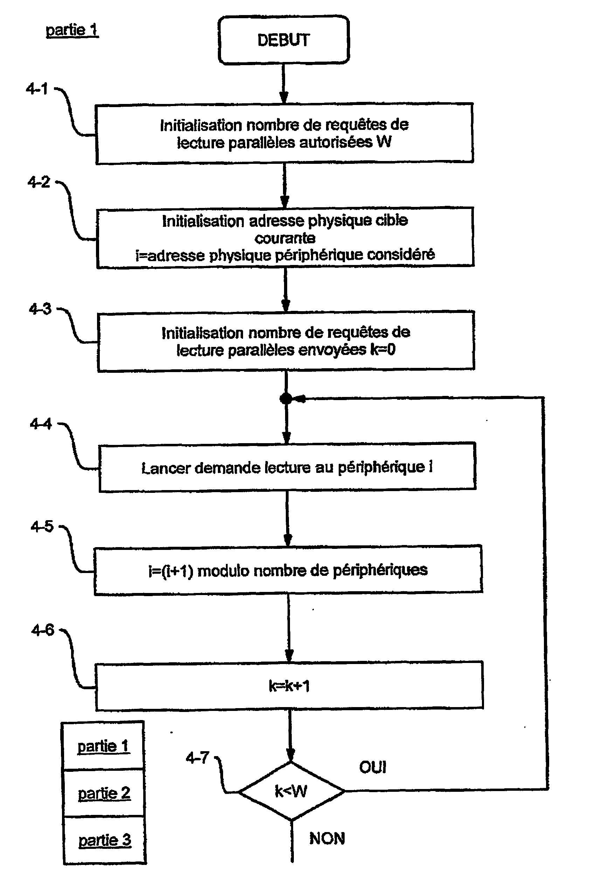

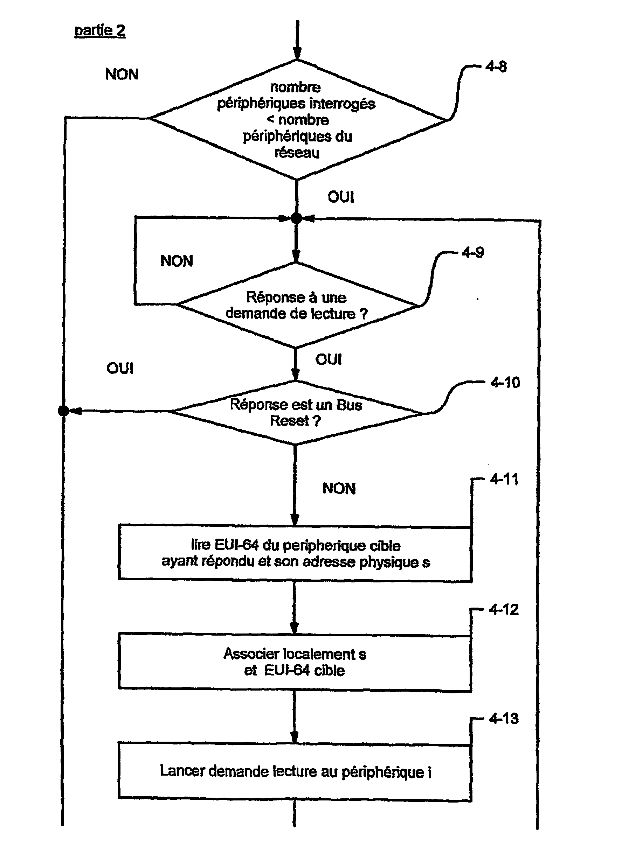

Sur la figure 3, on a représenté une variante de la présente invention où l'exploration du réseau par chaque périphérique se fait selon un ordre aléatoire de la numérotation des adresses physiques des différents périphériques connectés au réseau. En effet, le mode de réalisation précédemment décrit reposait sur un ordre préétabli de parcours des différents périphériques du réseau alors que l'on peut considérer que chaque périphérique parcourt le réseau selon un ordre aléatoire propre. Cependant, chaque périphérique connecté au réseau commence toujours son exploration du réseau par lui-même, c'est à dire en se considérant comme le premier périphérique cible pour l'envoi de ses requêtes de lecture de l'identifiant. On considère le procédé pour un périphérique quelconque du réseau envisagé. Ce périphérique va explorer le réseau pour trouver les adresses statiques EUI-64 des périphériques environnants dont il connaît les adresses physiques puisque ces dernières vont de zéro au nombre de périphériques moins un. Le périphérique considéré va donc lire l'adresse statique EUI-64 du premier périphérique cible (3-2) c'est à dire de lui-même (3-1) et l'associer en interne dans une table à l'adresse physique du périphérique cible considéré (3-3). Le périphérique considéré va ensuite marquer en interne, par exemple dans un tableau, le périphérique qu'il vient de traiter (3-4). Il change ensuite de périphérique cible courant : l'adresse physique du nouveau périphérique cible courant est choisie de manière aléatoire parmi les adresses physiques des périphériques n'ayant pas encore été associés (3-5) indiqués grâce au tableau par exemple. Tant qu'il restera dans le réseau des périphériques pour lesquels le périphérique considéré n'aura pas fait l'association (3-6), il reprendra les étapes à partir de la lecture de l'adresse statique EUI-64 pour le nouveau périphérique cible courant.

La variante de la présente invention présentée par la figure 3 limite le nombre de collisions et donc la surcharge des requêtes au niveau des ROM des périphériques cibles. En effet, si un grand nombre de périphériques est connecté au réseau, la probabilité que deux périphériques interrogent en même temps un même troisième dépend des fonctions aléatoires utilisées pour le choix des périphériques cibles. Si on choisit une fonction aléatoire différente pour chaque périphérique ou une même fonction aléatoire initialisée avec des valeurs différentes selon chaque périphérique, par exemple leur adresse physique, on limite alors la probabilité de collision.

On peut alors imaginer que chaque périphérique possède un générateur aléatoire ou qu'il y a un générateur aléatoire commun à tous les périphériques qui va créer une liste, classée de manière aléatoire, des adresses physiques des différents périphériques, et que chaque périphérique va parcourir cette liste commune en commençant à des endroits différents, dans ce cas, on retrouve un ordre de parcours préétabli. Par exemple, un périphérique donné commence à parcourir le réseau à partir du périphérique cible d'adresse physique correspondant à l'élément dans la liste dont le numéro est sa propre adresse physique.

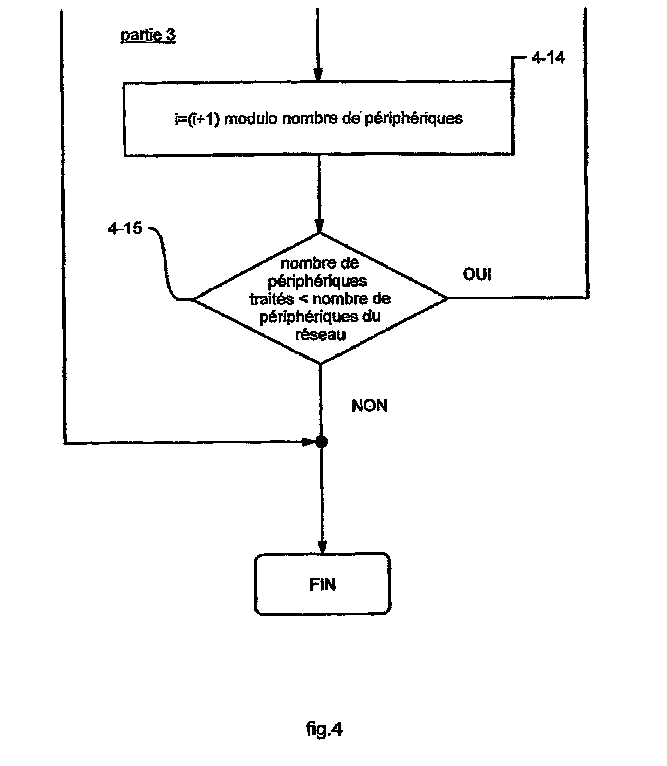

La figure 4 est un organigramme qui présente une amélioration possible de la présente invention puisqu'elle permet aux différents périphériques du réseau de lancer dans un même laps de temps un certain nombre de requêtes de lecture en parallèle, c'est-à-dire qu'un périphérique donné n'a pas besoin d'attendre la réponse d'un périphérique cible pour envoyer une requête de lecture au périphérique cible suivant. Il faut tout de même limiter le nombre de requêtes de lecture en parallèle possibles afin de ne pas surcharger le réseau. Le nombre maximal de requêtes de lecture en parallèle est par exemple une constante qui reflète les capacités de traitement du réseau lui-même, par exemple cette constante dépend de la taille des piles ou des mémoires tampons ; elle doit être fixée au début de la phase d'association (4-1). L'amélioration présentée par la figure 4 est apportée au principe exposé dans la figure 2 : l'exploration du réseau par chaque périphérique commence par lui-même (4-2) et se fait selon l'ordre de la numérotation des adresses physiques des différents périphériques connectés au réseau (4-5). Le périphérique considéré va donc envoyer en parallèle autant de requêtes de lecture qu'il est autorisé à le faire (4-3, 4-6, 4-7), sans attendre les réponses des périphériques cibles auxquels il a envoyé ces requêtes pour passer au périphérique cible suivant. Comme pour l'invention présentée dans la figure 2, le passage d'un périphérique cible au périphérique cible suivant se fait par incrément de l'adresse physique du périphérique cible courant d'une unité modulo le nombre de périphériques connectés au réseau (4-5). Le périphérique considéré attend ensuite une réponse aux requêtes qu'il a précédemment envoyées (4-9). Si le périphérique reçoit un ordre de reconfiguration du réseau ou « bus reset » en anglais (4-10) alors le périphérique recommence l'exploration du réseau. Si le périphérique considéré reçoit une réponse contenant un identifiant tel que l'adresse statique EUI-64 utilisée jusqu'à présent, alors il associe en interne l'adresse physique du périphérique qui lui a répondu et l'adresse statique EUI-64 reçue (4-12). Ensuite, tant que le nombre de périphériques interrogés par une requête est strictement inférieur au nombre de périphériques connectés au réseau (4-15), il lance une nouvelle requête de lecture au périphérique cible courant (4-13) et il incrémente l'adresse courante du périphérique cible (4-14).

L'amélioration de la présente invention présentée dans la figure 4 possède les même avantages que le procédé présenté dans la figure 2 puisqu'elles reposent toutes les deux sur le même principe de décalage pour les adresses des périphériques cibles. Cela réduit donc le nombre de collisions et évite la surcharge des ROM de configuration des périphériques. De plus, la possibilité d'envoyer en parallèle plusieurs requêtes de lecture permet aux périphériques de réduire les temps d'attente des réponses à ces requêtes. En effet, si un périphérique est lent à répondre, il peut traiter la réponse d'un périphérique plus rapide qui a été interrogé après le plus lent et ainsi améliorer l'efficacité de l'exploration.

On peut appliquer une méthode similaire à la deuxième variante de l'invention présentée sur la figure 3. En effet, la possibilité de lancer des requêtes de lecture en parallèle est indépendante de la façon dont on parcourt le réseau. Au lieu de le parcourir dans l'ordre de la numérotation des adresses physiques comme on le fait dans l'amélioration présentée dans la figure 4, on peut aussi le parcourir de manière aléatoire en utilisant le procédé décrit dans la figure 3.

Par ailleurs, le procédé d'envoi de requêtes en parallèle s'applique également dans le cas où, comme dans l'art antérieur, chaque périphérique utilise le même ordre d'exploration.

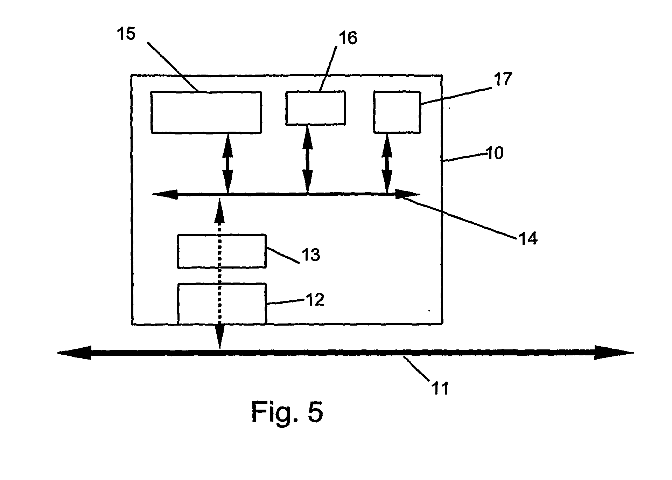

La figure 5 est un diagramme-bloc d'un périphérique 10. Ce périphérique est par exemple un lecteur optique de 'DVD'. Le périphérique 10 est connecté au bus 1394 portant la référence 11 à travers une interface physique 12 et un circuit de liaison 13; ce dernier est relié à un bus parallèle interne 14 du périphérique 10. Un microprocesseur 15 ou un dispositif équivalent assure la gestion du périphérique, ce qui comprend un circuit pour gérer les entrées/sorties 16 et une mémoire 17. Ces trois derniers éléments sont aussi liés au bus parallèle 14.

Typiquement, le microprocesseur prend en charge l'implémentation du procédé d'auto identification, les procédés de détermination de la topologie du réseau et les procédés pour établir les tables d'association. Les informations concernant la topologie après la réinitialisation et les tables d'associations sont conservées par exemple dans la mémoire 17.

Il est bien entendu que des modifications peuvent être apportées au procédé pour sa mise en oeuvre, sans qu'elles sortent pour autant du cadre de la présente invention, tel qu'il est défini par les revendications.

Selon les exemples donnés, chaque périphérique commence la lecture de l'identifiant par soi-même. Ceci n'est cependant pas obligatoire, d'autres solutions initiales peuvent être envisagées par l'homme du métier: décalage fixe par rapport à l'adresse physique du périphérique considéré par exemple.

## Revendications

1. Procédé d'identification de dispositifs connectés à un réseau de communication où chaque dispositif est distingué par un identifiant permanent et un identifiant temporaire, et où au moins un dispositif cherche à associer l'identifiant permanent et l'identifiant temporaire des autres dispositifs connectés, le procédé comprenant, au niveau du au moins un dispositif, les étapes suivantes :
- une étape de détermination des identifiants temporaires des dispositifs du réseau ;
- une étape de lecture des identifiants permanents des dispositifs du réseau ;
- une étape d'association de l'identifiant permanent et de l'identifiant temporaire de chaque dispositif ;
**caractérisé en ce que** l'étape de lecture est effectuée par requêtes successives auprès de chaque dispositif, l'ordre d'adressage des requêtes aux dispositifs étant fonction d'un paramètre propre du au moins un dispositif lecteur.

2. Procédé selon la revendication 1, **caractérisé en ce que** le paramètre propre d'un dispositif est son identifiant temporaire dans le réseau.

3. Procédé selon la revendication 1, **caractérisé en ce que** l'identifiant temporaire d'un dispositif dans le réseau est son adresse physique, attribuée à chaque réinitialisation du réseau.

4. Procédé selon la revendication 2 ou 3, **caractérisé en ce que** chaque dispositif connecté au réseau commence la lecture par lui-même.

5. Procédé selon l'une des revendications 2 à 4, **caractérisé en ce que** l'ordre d'adressage de chaque dispositif est l'ordre croissant ou décroissant des identifiants temporaires des appareils à adresser.

6. Procédé selon les revendications 4 et 5, **caractérisé en ce que**, suite à un changement de configuration du réseau, chaque dispositif connecté au réseau effectue les étapes suivantes:
(a) initialiser l'adresse de destination du dispositif cible dont l'identifiant permanent est à lire avec l'identifiant temporaire du dispositif effectuant la lecture (2-1) ;
(b) lire l'identifiant du dispositif cible (2-2) ;
(c) associer, au niveau du dispositif effectuant la lecture, l'identificateur permanent et l'identificateur temporaire du dispositif cible (2-3) ;
(d) incrémenter, respectivement décrémenter l'adresse de destination, modulo le nombre d'appareils dans le réseau et répéter les étapes (b) à (d) jusqu'à obtention de tous les identifiants permanents (2-4, 2-5).

7. Procédé selon l'une des revendications 2 à 4, **caractérisé en ce que** le dispositif effectuant la lecture choisit les dispositifs à lire dans un ordre aléatoire ou pseudo-aléatoire, le germe utilisé dans ce second cas étant le paramètre propre.

8. Procédé selon l'une des revendications 1 à 4, **caractérisé en ce que** ledit au moins un dispositif envoie les requêtes, sans attendre la réponse d'un dispositif particulier avant d'envoyer la requête suivante.

9. Procédé selon l'une des revendications 1 à 8, **caractérisé en ce que** l'identifiant permanent d'un dispositif est la valeur EUI-64.

10. Dispositif (10) pour connexion à un réseau de communication, ledit dispositif comportant des moyens (12, 13, 15) pour obtenir un identifiant permanent des dispositifs connectés au réseau et des moyens (15, 17) pour établir une table d'association entre l'identifiant permanent d'un dispositif et un identifiant temporaire de ce dispositif dans le réseau, **caractérisé en ce que** les moyens d'établissement de la table d'association sont adaptés pour effectuer une lecture de l'identificateur permanent d'un dispositif, l'ordre de lecture des identificateurs permanents auprès des dispositifs étant fonction d'un paramètre propre au dispositif effectuant la lecture.

11. Dispositif selon la revendication 10, **caractérisé en ce que** le paramètre propre est l'adresse physique du dispositif dans le réseau.

## Claims

1. Process for identifying devices connected to a communication network where each device is distinguished by a permanent identifier and a temporary identifier, and where at least one device seeks to associate the permanent identifier and the temporary identifier of the other connected devices, the process comprising, at the level of the at least one device, the following steps:
- a step of determining the temporary identifiers of the devices of the network;
- a step of reading the permanent identifiers of the devices of the network;
- a step of associating the permanent identifier and the temporary identifier of each device;
**characterized in that** the reading step is performed by successive requests at each device, the order of addressing of the requests to the devices being dependent on a parameter specific to the at least one reader device.

2. Process according to Claim 1, **characterized in that** the parameter specific to a device is its temporary identifier in the network.

3. Process according to Claim 1, **characterized in that** the temporary identifier of a device in the network is its physical address, allocated during each reinitialization of the network.

4. Process according to Claim 2 or 3, **characterized in that** each device connected to the network commences the reading with itself.

5. Process according to one of Claims 2 to 4, **characterized in that** the order of addressing of each device is the ascending or descending order of the temporary identifiers of the appliances to be addressed.

6. Process according to Claims 4 and 5, **characterized in that**, following a change of configuration of the network, each device connected to the network performs the following steps:
(a) initializing the destination address of the target device whose permanent identifier is to be read with the temporary identifier of the device performing the reading (2-1);
(b) reading the identifier of the target device (2-2);
(c) associating, at the level of the device performing the reading, the permanent identifier and the temporary identifier of the target device (2-3);
(d) incrementing, respectively decrementing, the destination address, modulo the number of appliances in the network and repeating steps (b) to (d) until all the permanent identifiers (2-4, 2-5) are obtained.

7. Process according to one of Claims 2 to 4, **characterized in that** the device performing the reading chooses the devices to be read in a random or pseudorandom order, the seed used in this second case being the specific parameter.

8. Process according to one of Claims 1 to 4, **characterized in that** the said at least one device sends the requests, without waiting for the response of a particular device before sending the next request.

9. Process according to one of Claims 1 to 8, **characterized in that** the permanent identifier of a device is the EUI-64 value.

10. Device (10) for connection to a communication network, the said device comprising means (12, 13, 15) for obtaining a permanent identifier of the devices connected to the network and means (15, 17) for compiling a table of association between the permanent identifier of a device and a temporary identifier of that device in the network, **characterized in that** the means for compiling the table of association are able to perform a reading of the permanent identifier of a device, the order of reading of the permanent identifiers at the devices being dependent on a parameter specific to the device performing the reading.

11. Device according to Claim 10, **characterized in that** the specific parameter is the physical address of the device in the network.

## Patentansprüche

1. Verfahren zur Identifizierung von an ein Netz angeschlossenen Vorrichtungen, wobei jede Vorrichtung sich durch eine eindeutige Dauerkennung und eine vorübergehende Kennung unterscheidet, und wobei mindestens eine Vorrichtung versucht, intern die Dauerkennung und die vorübergehende Kennung der anderen angeschlossenen Vorrichtungen zuzuordnen, wobei das Verfahren in Höhe der mindestens einen Vorrichtung die folgenden Schritte aufweist:
- einen Schritt der Bestimmung der vorübergehenden Kennungen der Vorrichtungen des Netzes;
- einen Schritt des Lesens der Dauerkennungen der Vorrichtungen des Netzes;
- einen Schritt der Zuordnung der Dauerkennung und der vorübergehenden Kennung jeder Vorrichtung;
**dadurch gekennzeichnet, dass** der Leseschritt durch aufeinander folgende Anforderungen an jede Vorrichtung durchgeführt wird, wobei die Adressierungsreihenfolge der Anforderungen an die Vorrichtungen von einem Eigenparameter der mindestens einen lesenden Vorrichtung abhängt.

2. Verfahren nach Anspruch 1, **dadurch gekennzeichnet, dass** der Eigenparameter jeder Vorrichtung ihre vorübergehende Kennung im Netz ist.

3. Verfahren nach Anspruch 1, **dadurch gekennzeichnet, dass** die vorübergehende Kennung einer Vorrichtung im Netz ihre physische Adresse ist, die bei jedem Reset des Netzes zugeteilt wird.

4. Verfahren nach Anspruch 2 oder 3, **dadurch gekennzeichnet, dass** jede an das Netz angeschlossene Vorrichtung das Lesen bei sich selbst beginnt.

5. Verfahren nach einem der Ansprüche 2 bis 4, **dadurch gekennzeichnet, dass** die Adressierungsreihenfolge jeder Vorrichtung die ansteigende oder abnehmende Reihenfolge der vorübergehenden Kennungen der zu adressierenden Geräte ist.

6. Verfahren nach den Ansprüchen 4 und 5, **dadurch gekennzeichnet, dass** nach einer Rekonfiguration des Netzes jede an das Netz angeschlossene Vorrichtung die folgenden Schritte durchführt:
(a) Initialisieren der Zieladresse der Zielvorrichtung, deren Dauerkennung mit der vorübergehenden Kennung der das Lesen durchführenden Vorrichtung zu lesen ist (2-1);
(b) Lesen der Kennung der Zielvorrichtung (2-2);
(c) Zuordnen in Höhe der das Lesen durchführenden Vorrichtung der Dauerkennzeichnung und der vorübergehenden Kennzeichnung der Zielvorrichtung (2-3);
(d) Inkrementieren bzw. Dekrementieren der Zieladresse Modulo Anzahl von Geräten im Netz und Wiederholen der Schritte (b) bis (d), bis alle Dauerkennungen erhalten sind (2-4, 2-5).

7. Verfahren nach einem der Ansprüche 2 bis 4, **dadurch gekennzeichnet, dass** die das Lesen durchführende Vorrichtung die zu lesenden Vorrichtungen in einer Zufallsreihenfolge oder Pseudozufallsreihenfolge auswählt, wobei der im zweiten Fall verwendete Ursprung der Eigenparameter ist.

8. Verfahren nach einem der Ansprüche 1 bis 4, **dadurch gekennzeichnet, dass** die mindestens eine Vorrichtung die Anforderungen sendet, ohne die Antwort einer bestimmten Vorrichtung abzuwarten, ehe sie die folgende Anforderung sendet.

9. Verfahren nach einem der Ansprüche 1 bis 8, **dadurch gekennzeichnet, dass** die Dauerkennung einer Vorrichtung der Wert EUI-64 ist.

10. Vorrichtung (10) für den Anschluss an ein Kommunikationsnetz, wobei die Vorrichtung Mittel (12, 13, 15), um eine Dauerkennung der an das Netz angeschlossenen Vorrichtungen zu erhalten, und Mittel (15, 17) aufweist, um eine Zuordnungstabelle zwischen der Dauerkennung einer Vorrichtung und einer vorübergehenden Kennung dieser Vorrichtung im Netz zu erstellen, **dadurch gekennzeichnet, dass** die Mittel zur Erstellung der Zuordnungstabelle ausgelegt sind, um ein Lesen der Dauerkennzeichnung einer Vorrichtung durchzuführen, wobei die Lesereihenfolge der Dauerkennzeichnungen in den Vorrichtungen von einem Eigenparameter der Vorrichtung abhängt, die das Lesen durchführt.

11. Vorrichtung nach Anspruch 10, **dadurch gekennzeichnet, dass** der Eigenparameter die physische Adresse der Vorrichtung im Netz ist.
